(19) 

Europäisches
Patentamt
European
Patent Office
Office européen
des brevets

(11) **EP 4 564 495 A1**

(12) **EUROPEAN PATENT APPLICATION**
published in accordance with Art. 153(4) EPC

(43) Date of publication:
04.06.2025  Bulletin 2025/23

(21) Application number: 23846518.1

(22) Date of filing: 25.07.2023

(51) International Patent Classification (IPC):
*H01M 10/04* (2006.01)    *H01M 4/02* (2006.01)
*H01M 4/13* (2010.01)    *H01M 10/052* (2010.01)
*H01M 10/0585* (2010.01)    *H01M 50/105* (2021.01)
*H01M 50/50* (2021.01)    *H01M 50/548* (2021.01)
*H01M 50/557* (2021.01)

(52) Cooperative Patent Classification (CPC):
H01M 4/02; H01M 4/13; H01M 10/04;
H01M 10/052; H01M 10/0585; H01M 50/105;
H01M 50/50; H01M 50/548; H01M 50/557;
Y02E 60/10

(86) International application number:
PCT/JP2023/027223

(87) International publication number:
WO 2024/024788 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  28.07.2022  JP 2022120968

(71) Applicant: FUJIFILM Corporation
Tokyo 106-8620 (JP)

(72) Inventors:
• FUKUNAGA, Akihito
ashigara-shi, Kanagawa 250-0193 (JP)
• IWASE, Eijiro
ashigara-shi, Kanagawa 250-0193 (JP)

(74) Representative: Meissner Bolte Partnerschaft
mbB
Patentanwälte Rechtsanwälte
Postfach 86 06 24
81633 München (DE)

(54) **BATTERY AND ELECTRODE MATERIAL**

(57)    The battery includes a plurality of electrode materials, in which the electrode material includes a first pouch, a first collector, a positive electrode, a separator, a negative electrode, a second collector, and a second pouch in this order, at least one of adjacent electrode materials has at least one of a first opening portion between the first pouch and the first collector or a second opening portion between the second pouch and the second collector, at least the other of the adjacent electrode materials has at least one of a first insertion part by the first collector or a second insertion part by the second collector, and the adjacent electrode materials are joined by at least one of insertion of the first insertion part into the first opening portion or insertion of the second insertion part into the second opening portion; and an electrode material applied to the battery.

FIG. 3

EP 4 564 495 A1

**Description**

BACKGROUND OF THE INVENTION

1. Field of the Invention

The present disclosure relates to a battery and an electrode material.

2. Description of the Related Art

In recent years, development of a semi-solid state battery or an all-solid state battery has been studied.
In general, the semi-solid state battery and the all-solid state battery are used by being appropriately cut into a desired size according to use application thereof (refer to JP2020-564419A).

SUMMARY OF THE INVENTION

A large amount of cost, time, and the like is required for design and development of a device for manufacturing the semi-solid state battery and the all-solid state battery having a desired size or a device for cutting the semi-solid state battery and the all-solid state battery.
In addition, the present inventors have found that, in a case where a plurality of semi-solid state batteries or all-solid state batteries are used side by side, there is a concern that a gap may be generated between the batteries depending on the size of the semi-solid state battery or the all-solid state battery, and an energy density may decrease.
An object to be achieved by one embodiment of the present disclosure is to provide a battery having an excellent energy density, in which a size can be appropriately adjusted without using a special device or the like.
An object to be achieved by another embodiment of the present disclosure is to provide an electrode material applied to the above-described battery.
Specific methods for achieving the object are as follows.

<1> A battery comprising:

a plurality of electrode materials,
in which the electrode material includes a first pouch, a first collector, a positive electrode, a separator, a negative electrode, a second collector, and a second pouch in this order,
at least one of adjacent electrode materials has at least one of a first opening portion between the first pouch and the first collector or a second opening portion between the second pouch and the second collector,
at least the other of the adjacent electrode materials has at least one of a first insertion part by the first collector or a second insertion part by the second collector, and
the adjacent electrode materials are joined by at least one of insertion of the first insertion part into the first opening portion or insertion of the second insertion part into the second opening portion.

<2> The battery according to <1>,
in which positive electrodes and negative electrodes of the adjacent electrode materials are in contact with each other.
<3> The battery according to <1> or <2>,
in which a ratio of a thickness of the first collector to a thickness of the positive electrode and a ratio of a thickness of the second collector to a thickness of the negative electrode are less than 1.
<4> The battery according to any one of <1> to <3>,
in which, provided that thicknesses of positive electrodes of the adjacent electrode materials are each denoted by A1 and A2 and thicknesses of negative electrodes of the adjacent electrode materials are each denoted by B1 and B2, the following expression 1 and expression 2 are satisfied,

$$\text{(expression 1)} \quad 0.8 \le A1/A2 \le 1.2$$

$$\text{(expression 2)} \quad 0.8 \le B1/B2 \le 1.2.$$

<5> The battery according to any one of <1> to <4>,
in which, provided that thicknesses of first collectors of the adjacent electrode materials are each denoted by C1 and C2 and thicknesses of second collectors of the adjacent electrode materials are each denoted by D1 and D2, the following expression 3 and expression 4 are satisfied,

$$(\text{expression 3}) \quad 0.8 \le C1/C2 \le 1.2$$

$$(\text{expression 4}) \quad 0.8 \le D1/D2 \le 1.2.$$

<6> The battery according to any one of <1> to <5>,
in which a length of the first insertion part is smaller than a length of a portion of the first collector other than the first insertion part by 1 mm to 10 mm, and a length of the second insertion part is smaller than a length of a portion of the second collector other than the second insertion part by 1 mm to 10 mm.
<7> The battery according to any one of <1> to <6>,
in which, provided that a width of the first insertion part is denoted by W1A and a width of the first opening portion is denoted by W2A, the following expression 5 is satisfied, and provided that a width of the second insertion part is denoted by W1B and a width of the second opening portion is denoted by W2B, the following expression 6 is satisfied,

$$(\text{expression 5}) \quad W1A > W2A/2$$

$$(\text{expression 6}) \quad W1B > W2B/2.$$

<8> The battery according to any one of <1> to <7>,
in which the first pouch and the second pouch of the electrode material, which is arranged at an end part, are bonded to each other.
<9> An electrode material comprising, in the following order:

a first pouch;
a first collector;
a positive electrode;
a separator;
a negative electrode;
a second collector; and
a second pouch,
in which the electrode material further includes one or more selected from the group consisting of a first opening portion between the first pouch and the first collector, a second opening portion between the second pouch and the second collector, a first insertion part by the first collector, and a second insertion part by the second collector.

According to one embodiment of the present disclosure, it is possible to provide a battery having an excellent energy density, in which a size can be appropriately adjusted without using a special device or the like.
In addition, according to another embodiment of the present disclosure, it is possible to provide an electrode material applied to the above-described battery.

BRIEF DESCRIPTION OF THE DRAWINGS

Fig. 1 is a schematic cross-sectional view showing an embodiment of an electrode material.
Fig. 2 is a schematic cross-sectional view showing an embodiment of the electrode material.
Fig. 3 is a schematic cross-sectional view showing an embodiment of a battery.
Fig. 4 is a top view of an electrode material shown in Fig. 3.
Fig. 5 is a top view showing an embodiment of the battery.
Fig. 6 is a top view showing an embodiment of the battery.
Fig. 7 is a schematic cross-sectional view for describing one embodiment of a manufacturing method of the electrode material shown in Fig. 2.

DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range.

In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, in a case where an embodiment is described with reference to the drawing, the configuration of the embodiment is not limited to the configuration shown in the drawing. In addition, sizes of members in each drawing are conceptual, and a relative relationship between the sizes of the members is not limited thereto.

[Battery]

The battery according to the present disclosure includes a plurality of electrode materials, in which the electrode material includes a first pouch, a first collector, a positive electrode, a separator, a negative electrode, a second collector, and a second pouch in this order, at least one of adjacent electrode materials has at least one of a first opening portion between the first pouch and the first collector or a second opening portion between the second pouch and the second collector, at least the other of the adjacent electrode materials has at least one of a first insertion part by the first collector or a second insertion part by the second collector, and the adjacent electrode materials are joined by at least one of insertion of the first insertion part into the first opening portion or insertion of the second insertion part into the second opening portion.

With the battery according to the present disclosure, a size can be appropriately adjusted without using a special device or the like, and an energy density is excellent.

The reason why the above-described effect is exhibited is not clear, but is presumed as follows.

The battery according to the present disclosure includes a plurality of electrode materials, and has a structure in which an insertion part included in one of adjacent electrode materials is inserted into an opening portion included in the other of the adjacent electrode materials.

According to the above-described structure, the size of the battery can be adjusted by increasing or decreasing the number of electrode materials to be used. In addition, according to the above-described structure, it is presumed that a distance between the adjacent electrode materials can be reduced as compared with a case where a plurality of solid state batteries or the like in the related art are arranged side by side, and the energy density can be improved.

The battery according to the present disclosure may include an adhesive layer between the first pouch and the first collector and between the second pouch and the second collector.

In the battery according to the present disclosure, from the viewpoint of improving the energy density, a distance between positive electrodes and a distance between negative electrodes (that is, the distance between electrodes), which are provided in the adjacent electrode materials, are each preferably 20 mm or less, more preferably 10 mm or less, still more preferably 5 mm or less, and particularly preferably 0 $\mu$m (in contact with each other).

In the present disclosure, the above-described distance between electrodes can be measured using a caliper, a scale, or the like. Specifically, a caliper conforming to JIS B 7507 (2013) can be used.

In the electrode material included in the battery according to the present disclosure, a ratio of a thickness of the first collector to a thickness of the positive electrode (thickness of first collector/thickness of positive electrode) and a ratio of a thickness of the second collector to a thickness of the negative electrode (thickness of second collector/thickness of negative electrode) are each preferably less than 1, more preferably 0.05 to 0.1, still more preferably 0.01 to 0.5, and particularly preferably 0.01 to 0.1.

In the present disclosure, the thickness is an arithmetic average of thicknesses at three points measured by cross-sectional observation. In the cross-sectional observation, a known microscope (for example, a scanning electron microscope) can be used.

In the battery according to the present disclosure, from the viewpoint of improving the energy density, it is preferable that, in a case where thicknesses of the positive electrodes of the adjacent electrode materials are each denoted by A1 and A2 and thicknesses of the negative electrodes of the adjacent electrode materials are each denoted by B1 and B2, the following expression 1 and expression 2 are satisfied.

$$(\text{Expression 1}) \quad 0.8 \leq A1/A2 \leq 1.2$$

$$(\text{Expression 2}) \quad 0.8 \leq B1/B2 \leq 1.2$$

In the battery according to the present disclosure, from the viewpoint of improving the energy density, it is preferable that, in a case where thicknesses of first collectors of the adjacent electrode materials are each denoted by C1 and C2 and thicknesses of second collectors of the adjacent electrode materials are each denoted by D1 and D2, the following expression 3 and expression 4 are satisfied.

$$(\text{Expression 3}) \quad 0.8 \leq C1/C2 \leq 1.2$$

$$(\text{Expression 4}) \quad 0.8 \leq D1/D2 \leq 1.2$$

The battery according to the present disclosure includes a plurality of electrode materials, and it is preferable that the first pouch and the second pouch of the electrode material, which is arranged at an end part, are bonded to each other.

(First pouch and second pouch)

The first pouch and the second pouch (hereinafter, collectively referred to as a pouch) can contain a thermoplastic resin. Examples of the thermoplastic resin include polyethylene terephthalate (PET), polypropylene (PP), polyethylene (PE), a cyclic olefin polymer, triacetyl cellulose (TAC), polyimide (PI), polyamide (PA), an ethylene-vinyl acetate copolymer (EVA), an ethylene-vinyl alcohol copolymer (EVOH), polyvinylidene chloride (PVDC), and nylon (ONY).

A content of the thermoplastic resin with respect to the total mass of the pouch is not particularly limited, and may be 50% by mass or more, 70% by mass or more, 90% by mass or more, or 100% by mass.

The pouch may contain additives such as a pigment, a dye, an ultraviolet absorber, a light stabilizer, and an antioxidant.

From the viewpoint of satisfactorily supporting the first collector and the like and the viewpoint of transportability, a thickness of the pouch is preferably 5 $\mu$m or more, more preferably 7 $\mu$m or more, and still more preferably 10 $\mu$m or more.

From the viewpoint of flexibility and lightness, the above-described thickness is preferably 100 $\mu$m or less, more preferably 70 $\mu$m or less, and still more preferably 50 $\mu$m or less.

Materials, thicknesses, and the like of the first pouch and the second pouch may be the same or different from each other.

(First collector)

The first collector can contain a conventionally known material contained in a positive electrode collector. The first collector preferably contains one or more metals selected from the group consisting of aluminum, an aluminum alloy, stainless steel, nickel, and titanium; and more preferably contains one or more metals selected from the group consisting of aluminum and an aluminum alloy.

In addition, the first collector may have, on a surface thereof, a coating layer containing one or more of carbon, nickel, titanium, silver, gold, platinum, and vanadium oxide.

From the viewpoint of transportability and the like, a thickness of the first collector is preferably 3 $\mu$m or more, more preferably 5 $\mu$m or more, and particularly preferably 10 $\mu$m or more.

From the viewpoint of flexibility and lightness, the above-described thickness is preferably 100 $\mu$m or less, more preferably 70 $\mu$m or less, and still more preferably 50 $\mu$m or less.

(Positive electrode)

The positive electrode can contain a positive electrode active material. The positive electrode active material is preferably a material capable of reversibly intercalating and deintercalating lithium ions.

Examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B).

A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxide having a spinel-type structure include $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound include an olivine-type iron phosphate salt (for example, $LiFePO_4$ and $Li_3Fe_2(PO_4)_3$), a pyrroline phosphate salt (for example, $LiFeP_2O_7$), a cobalt phosphate salt (for example, $LiCoPO_4$), and a monoclinic vanadium phosphate salt (for example, $Li_3V_2(PO_4)_3$ (lithium vanadium phosphate)).

Examples of the lithium-containing transition metal halogenated phosphoric acid compound include an iron fluorophosphate (for example, $Li_2FePO_4F$), a manganese fluorophosphate (for example, $Li_2MnPO_4F$), and a cobalt fluorophosphate (for example, $Li_2CoPO_4F$).

Examples of the lithium-containing transition metal silicate compound include $Li_2FeSiO_4$, $Li_2MnSiO_4$, and $Li_2CoSiO_4$.

The transition metal oxide is preferably a transition metal oxide having a bedded salt-type structure, and more preferably at least one compound selected from the group consisting of $LiCoO_2$ (lithium cobalt oxide [LCO]), $LiNi_{0.85}Co_{0.10}Al_{0.05}O_2$ (lithium nickel cobalt aluminum oxide [NCA]), and $LiNi_{1/3}Co_{1/3}Mn_{1/3}O_2$ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handle ability, it is preferably a particle shape.

A volume average particle diameter of the positive electrode active material is not limited, and can be, for example, 0.1 $\mu$m to 50 $\mu$m. The volume average particle diameter of the positive electrode active material is preferably 0.3 $\mu$m to 40 $\mu$m and more preferably 0.5 $\mu$m to 30 $\mu$m.

In a case where the volume average particle diameter of the positive electrode active material is 0.3 $\mu$m or more, it is possible to easily form the positive electrode, and it is possible to suppress scattering of a material constituting the positive electrode during handling. In a case where the volume average particle diameter of the positive electrode active material is 40 $\mu$m or less, the thickness of the electrode material can be easily adjusted, and generation of voids in the molding process can be suppressed.

The volume average particle diameter of the positive electrode active material is measured by the following method.

A dispersion liquid containing 0.1% by mass of the positive electrode active material is prepared by mixing the positive electrode active material with a solvent (for example, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-920 manufactured by Horiba, Ltd.), data is taken in 50 times under a condition of a temperature of 25°C, and the volume average particle diameter is obtained. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

The positive electrode may contain only one kind of the positive electrode active material or may contain two or more kinds of the positive electrode active materials.

In addition, even in a case where the positive electrode contains one kind of the positive electrode active material, positive electrode active materials having different particle diameters may be used in combination.

A content of the positive electrode active material with respect to the total volume of the positive electrode is preferably 35% by volume to 75% by volume, more preferably 40% by volume to 75% by volume, and still more preferably 45% by volume to 75% by volume.

A surface of the positive electrode active material may be coated with a surface coating agent. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

From the viewpoint of improving battery performance (discharge capacity, output characteristics, and the like), the positive electrode may contain an inorganic solid electrolyte.

Here, the "solid electrolyte" means a solid electrolyte in which ions can be moved therein.

The inorganic solid electrolyte is included in the solid components.

Since the inorganic solid electrolyte does not contain an organic substance as a main ion conducting material, the inorganic solid electrolyte is clearly distinguished from an organic solid electrolyte (for example, a polymer electrolyte represented by polyethylene oxide (PEO) and an organic electrolyte salt represented by lithium bis(trifluoromethanesulfonyl)imide (LiTFSI)).

In addition, since the inorganic solid electrolyte is a solid in a steady state, the inorganic solid electrolyte is not dissociated or liberated into cations or anions. Therefore, the inorganic solid electrolyte is also clearly distinguished from an inorganic electrolyte salt (for example, $LiPF_6$, $LiBF_4$, lithium bis(fluorosulfonyl)imide (LiFSI), and LiCl) which dissociates or liberates into cations or anions in an electrolytic solution or a polymer.

The inorganic solid electrolyte is not limited as long as it is an inorganic solid electrolyte having an ion conductivity of a metal element belonging to Group 1 or Group 2 in the periodic table, and the inorganic solid electrolyte generally does not have electron conductivity.

In a case where the battery is used for a lithium ion battery, the inorganic solid electrolyte preferably has ion conductivity of lithium ions.

Examples of the inorganic solid electrolyte include a sulfide-based inorganic solid electrolyte and an oxide-based inorganic solid electrolyte. Among the above, from the viewpoint of being able to form a favorable interface between the active material and the inorganic solid electrolyte, the inorganic solid electrolyte is preferably a sulfide-based inorganic solid electrolyte.

The inorganic solid electrolyte preferably has a particle shape.

A volume average particle diameter of the inorganic solid electrolyte is preferably 0.01 $\mu$m or more, and more preferably 0.1 $\mu$m or more. The upper limit of the volume average particle diameter of the inorganic solid electrolyte is preferably 100 $\mu$m or less, and more preferably 50 $\mu$m or less.

The volume average particle diameter of the inorganic solid electrolyte is measured with a method based on the method of measuring the volume average particle diameter of the positive electrode active material described above.

The positive electrode may contain only one kind of the inorganic solid electrolyte or may contain two or more kinds of the inorganic solid electrolytes.

In a case where the positive electrode contains the inorganic solid electrolyte, from the viewpoint of reducing an interface resistance and maintaining battery characteristics (for example, improving cycle characteristics), a content of the inorganic solid electrolyte with respect to the total volume of the positive electrode is still more preferably 25% by volume to 35% by volume.

From the viewpoint of improving electron conductivity of the positive electrode active material, the positive electrode preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The positive electrode may contain only one kind of the conductive auxiliary agent or may contain two or more kinds of the conductive auxiliary agents.

In a case where the positive electrode contains the conductive auxiliary agent, from the viewpoint of improving the electron conductivity of the positive electrode active material, a content of the conductive auxiliary agent with respect to the total volume of the positive electrode is preferably 0.5% by volume to 5.0% by volume, more preferably 1.0% by volume to 4.5% by volume, and still more preferably 2.0% by volume to 4.0% by volume.

The positive electrode may contain an electrolytic solution.

The electrolytic solution is included in liquid components.

The electrolytic solution is not limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

Examples of the electrolyte contained in the electrolytic solution also include the materials described in the section of "Inorganic solid electrolyte" above.

As a component of the electrolytic solution, for example, an ionic liquid may be used. The ionic liquid may be used as the electrolyte or the solvent.

A content of the electrolytic solution with respect to the total volume of the positive electrode is preferably 70% by volume or less, more preferably 60% by volume or less, and still more preferably 55% by volume or less. In a case where the content of the electrolytic solution in the positive electrode is 70% by volume or less, it is possible to suppress the electrolytic solution from bleeding out in a case where the positive electrode is molded.

The lower limit of the content of the electrolytic solution in the positive electrode is not limited, and may be 0% by volume or more and may exceed 0% by volume.

The positive electrode may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The positive electrode may contain only one kind of the solvent or may contain two or more kinds of the solvents.

A content of the liquid components (that is, the electrolytic solution and the solvent) with respect to the total volume of the positive electrode is preferably 70% by volume or less, more preferably 60% by volume or less, and still more preferably 55% by volume or less.

In a case where the content of the liquid components in the positive electrode is 70% by volume or less, it is possible to suppress the liquid components from bleeding out in a case where the positive electrode is molded. In addition, in a case where the liquid components include the solvent, deterioration in battery performance can be suppressed.

The lower limit of the content of the liquid components in the positive electrode is not limited, and may be 0% by volume or more and may exceed 0% by volume.

The liquid component in the positive electrode, that is, the component in the positive electrode, which is in a liquid state at 25°C, is preferably in a liquid state even at -10°C and preferably in a liquid state even at -20°C. That is, the component in the positive electrode, which is in a liquid state at 25°C, is preferably a component which does not solidify at -10°C, and preferably a component which does not solidify at -20°C.

The positive electrode may contain a binder, the above-described additive, and the like.

From the viewpoint of weight reduction and cost reduction by reducing the amount of the members used for the collector foil and the pouch and the viewpoint of battery performance, the thickness of the positive electrode is preferably 100 μm to 900 μm and more preferably 150 μm to 600 μm.

(Separator)

As the separator, a separator which has been conventionally used for a semi-solid state battery or an all-solid state battery can be appropriately selected and used. Examples of the separator include a porous membrane containing a resin material such as polyethylene, polypropylene, polybutene, polyvinyl chloride, polyethylene terephthalate, polyether sulfone, polyamide, polyimide, polyimide amide, polyamide, polycycloolefin, nylon, and polytetrafluoroethylene.

A thickness of the separator is not particularly limited, and can be 0.5 $\mu$m to 40 $\mu$m.

(Second collector)

The second collector can contain a conventionally known material contained in a negative electrode collector. The second collector preferably contains one or more metals selected from the group consisting of aluminum, copper, a copper alloy, stainless steel, nickel, and titanium; and more preferably contains one or more metals selected from the group consisting of aluminum, copper, a copper alloy, and stainless steel.

In addition, the second collector may have, on a surface thereof, a coating layer containing one or more of carbon, nickel, titanium, silver, gold, platinum, and vanadium oxide.

From the viewpoint of transportability and the like, a thickness of the second collector is preferably 3 $\mu$m or more, more preferably 5 $\mu$m or more, and particularly preferably 10 $\mu$m or more.

From the viewpoint of flexibility and lightness, the above-described thickness is preferably 100 $\mu$m or less, more preferably 70 $\mu$m or less, and particularly preferably 50 $\mu$m or less.

(Negative electrode)

The negative electrode can contain a negative electrode active material. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In).

Among the above, from the viewpoint of reliability, the negative electrode active material is preferably a carbonaceous material or a lithium composite oxide.

Examples of the carbonaceous material include a material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin).

Examples of the carbonaceous material also include carbon fiber (polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, activated carbon fiber, and the like).

Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide ($Li_4Ti_5O_{12}$ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

A shape of the negative electrode active material is not limited, but is preferably a particle shape from the viewpoint of ease of handling and ease of managing uniformity in a case of mass production.

A volume average particle diameter of the negative electrode active material is preferably 0.1 $\mu$m to 60 $\mu$m, more preferably 0.3 $\mu$m to 50 $\mu$m, and particularly preferably 0.5 $\mu$m to 40 $\mu$m.

The volume average particle diameter of the negative electrode active material is measured by a method based on the method of measuring the volume average particle diameter of the positive electrode active material described above.

Examples of a method of adjusting the particle diameter of the negative electrode active material include a method of using a pulverizer or a classifier.

The negative electrode may contain only one kind of the negative electrode active material or may contain two or more kinds of the negative electrode active materials.

A content of the negative electrode active material with respect to the total volume of the negative electrode is preferably 30% by volume to 70% by volume, more preferably 40% by volume to 60% by volume, and still more preferably 45% by volume to 55% by volume.

A surface of the negative electrode active material may be coated with the above-described surface coating agent.

From the viewpoint of improving battery performance (discharge capacity, output characteristics, and the like), the negative electrode may contain the above-described inorganic solid electrolyte.

The negative electrode may contain only one kind of the inorganic solid electrolyte or may contain two or more kinds of the inorganic solid electrolytes.

In a case where the negative electrode contains the inorganic solid electrolyte, from the viewpoint of reducing the interface resistance and maintaining the battery characteristics (for example, improving the cycle characteristics), a content of the inorganic solid electrolyte with respect to the total volume of the negative electrode is preferably 30% by volume to 70% by volume, more preferably 40% by volume to 60% by volume, and still more preferably 45% by volume to 55% by volume.

From the viewpoint of improving electron conductivity of the negative electrode active material, the negative electrode preferably contains the above-described conductive auxiliary agent.

The negative electrode may contain only one kind of the conductive auxiliary agent or may contain two or more kinds of the conductive auxiliary agents.

In a case where the negative electrode contains the conductive auxiliary agent, from the viewpoint of improving the electron conductivity of the negative electrode active material, a content of the conductive auxiliary agent with respect to the total volume of the negative electrode is preferably 1.0% by volume to 5.0% by volume, more preferably 1.5% by volume to 4.0% by volume, and still more preferably 2.0% by volume to 3.0% by volume.

The negative electrode may contain the above-described electrolytic solution.

A content of the electrolytic solution with respect to the total volume of the negative electrode is preferably 70% by volume or less, more preferably 60% by volume or less, and still more preferably 55% by volume or less. In a case where the content of the electrolytic solution in the negative electrode is 70% by volume or less, it is possible to suppress the electrolytic solution from bleeding out in a case where the negative electrode is molded.

The lower limit of the content of the electrolytic solution in the negative electrode is not limited, and may be 0% by volume or more and may exceed 0% by volume.

The negative electrode may contain the above-described solvent.

The negative electrode may contain only one kind of the solvent or may contain two or more kinds of the solvents.

A content of the liquid components (that is, the electrolytic solution and the solvent) with respect to the total volume of the negative electrode is preferably 70% by volume or less, more preferably 60% by volume or less, and still more preferably 55% by volume or less.

In a case where the content of the liquid components in the negative electrode is 70% by volume or less, it is possible to suppress the liquid components from bleeding out in a case where the negative electrode is molded. In addition, in a case where the liquid components include the solvent, deterioration in battery performance can be suppressed.

The lower limit of the content of the liquid components in the negative electrode is not limited, and may be 0% by volume or more and may exceed 0% by volume.

The negative electrode may contain a binder, the above-described additive, and the like.

From the viewpoint of weight reduction and cost reduction by reducing the amount of the members used for the collector foil and the pouch and the viewpoint of battery performance, the thickness of the negative electrode is preferably 100 $\mu$m to 900 $\mu$m and more preferably 150 $\mu$m to 600 $\mu$m.

(First opening portion and second opening portion)

At least one of the adjacent electrode materials constituting the battery according to the present disclosure includes at least one of the first opening portion between the first pouch and the first collector or the second opening portion between the second pouch and the second collector. Hereinafter, the first opening portion and the second opening portion are collectively referred to as an opening portion.

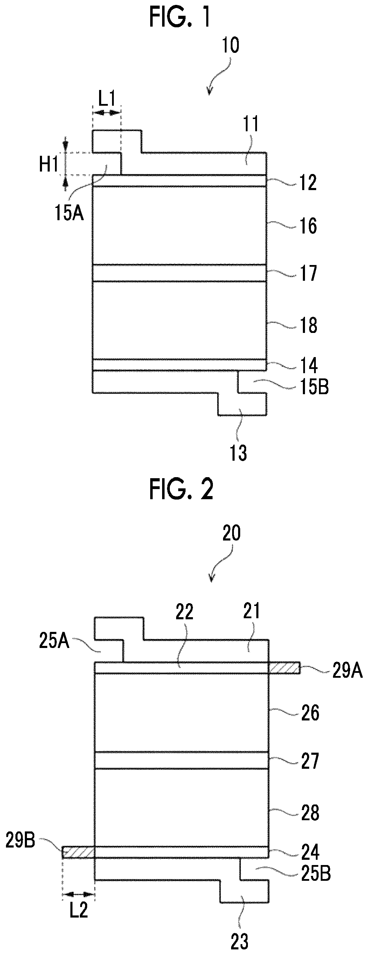

Fig. 1 shows a schematic cross-sectional view showing an embodiment of an electrode material including an opening portion between a first pouch and a first collector and an opening portion between a second pouch and a second collector.

As shown in Fig. 1, an electrode material 10 includes a first opening portion 15A between a first pouch 11 and a first collector 12, and a second opening portion 15B between a second pouch 13 and a second collector 14.

The first opening portion 15A and the second opening portion 15B may be provided at different end parts of the electrode material 10 (see Fig. 1), or may be provided at the same end part (not shown).

In Fig. 1, a positive electrode is indicated by reference numeral 16, a separator is indicated by reference numeral 17, and a negative electrode is indicated by reference numeral 18.

In Fig. 1, an example in which the first opening portion and the like are provided at one end part of the electrode material in a length direction and the second opening portion is provided at the other end part of the electrode material in the length direction has been shown; but the present invention is not limited thereto, and the first opening portion and the like may be provided at an end part in a width direction, or may be provided at end parts in the length direction and the width direction.

In Fig. 1, the electrode material having a rectangular shape in a case of being viewed from above has been described; but the present invention is not limited thereto, and a square shape or the like may be used.

In Fig. 1, an example in which one first opening portion and one second opening portion are provided at the end part of the electrode material in the length direction has been described; but the present invention is not limited thereto, and two or more first opening portions or the like may be provided at one end part.

In a case where the battery according to the present disclosure includes an adhesive layer, the opening portion may be provided between the adhesive layer and the first collector and between the adhesive layer and the second collector.

In a case where a length of the opening portion is denoted by La and a length of a surface in contact with the pouch and the collector is denoted by Lb, it is preferable that Lb is equal to or more than La.

A length of the opening portion is not particularly limited as long as it is larger than a length of the insertion part, and can be set to 5 mm to 20 mm.

In Fig. 1, the length of the first opening portion 15A is indicated by reference numeral L1.

The electrode material may include a plurality of opening portions (for example, two or more opening portions at one end in the width direction), and the above-described length of the opening portion refers to a preferred numerical range of the length of each opening portion.

A height of the opening portion is not particularly limited as long as it is larger than the thickness of the insertion part, and can be set to 0.05 $\mu$m to 5 $\mu$m.

In Fig. 1, the height of the first opening portion 15A is indicated by reference numeral H1.

The electrode material may include a plurality of opening portions (for example, two or more opening portions at one end in the width direction), and the above-described height of the opening portion refers to a preferred numerical range of the height of each opening portion.

A width of the opening portion is not particularly limited as long as it is larger than a width of the insertion part, and can be set to 50 mm to 1,000 mm.

The electrode material may include a plurality of opening portions (for example, two or more opening portions at one end in the width direction), and the above-described width of the opening portion refers to a preferred numerical range of the width of each opening portion.

A method of forming the opening portion is not particularly limited, and examples thereof include a method of folding an end part of the pouch in a case of laminating the collector on the surface of the pouch to form a portion (opening portion) in which the pouch and the collector do not come into contact with each other.

(First insertion part and second insertion part)

At least the other of the adjacent electrode materials constituting the battery according to the present disclosure includes at least one of the first insertion part by the first collector or the second insertion part by the second collector. Hereinafter, the first insertion part and the second insertion part will be collectively referred to as an insertion part.

It is preferable that the first insertion part is not provided at the same end part as the first opening portion, and it is preferable that the second insertion part is not provided at the same end part as the second opening portion.

The electrode material may include both the opening portion and the insertion part.

Fig. 2 is a schematic cross-sectional view showing an embodiment of an electrode material including a first opening portion, a second opening portion, a first insertion part, and a second insertion part.

In Fig. 2, an electrode material 20 includes a first pouch 21, a first collector 22, a positive electrode 26, a separator 27, a negative electrode 28, a second pouch 23, and a second collector 24.

As shown in Fig. 2, the electrode material 20 includes a first opening portion 25A between the first pouch 21 and the first collector 22, and an opening portion 25B between the second pouch 23 and the second collector 24. In Fig. 2, a form in which the first opening portion 25A and the second opening portion 25B are provided at different end parts of the electrode material 20 is shown, but the present invention is not limited thereto.

As shown in Fig. 2, the electrode material 20 includes a first insertion part 29A by the first collector 22 and a second insertion part 29B by the second collector 24. In Fig. 2, a form in which the first insertion part 29A and the second insertion part 29B are provided at different end parts of the electrode material 20 is shown, but the present invention is not limited thereto. In addition, in Fig. 2, diagonal lines are added to the first insertion part 29A and the second insertion part 29B.

In Fig. 2, an example in which the first insertion part and the second opening portion are provided at one end part of the electrode material in a length direction and the second insertion part and the first opening portion are provided at the other end part of the electrode material in the length direction has been shown; but the present invention is not limited thereto, and the first opening portion and the like may be provided at an end part in a width direction, or may be provided at end parts in the length direction and the width direction.

In Fig. 2, the electrode material having a rectangular shape in a case of being viewed from above has been described; but the present invention is not limited thereto, and a square shape or the like may be used.

In Fig. 2, an example in which one first opening portion, one second opening portion, one first insertion part, and one second insertion part are provided at the end part of the electrode material in the length direction has been described; but the present invention is not limited thereto, and two or more first opening portions or the like may be provided at one end part.

From the viewpoint of improving the energy density, a ratio of the length of the first insertion part to the length of the first opening portion (length of first insertion part/length of first opening portion) is preferably 0.6 to 1 and more preferably 0.65 to 1.

From the viewpoint of improving the energy density, a ratio of the length of the second insertion part to the length of the second opening portion (length of second insertion part/length of second opening portion) is preferably 0.6 to 1 and more preferably 0.65 to 1.

A length of the insertion part is not particularly limited, and can be 3 mm to 15 mm.

In Fig. 2, the length of the second insertion part 29B is denoted by reference numeral L2.

In a case where the length of the insertion part is denoted by Lc and a length of a portion of the collector other than the insertion part is denoted by Ld, from the viewpoint of supporting the positive electrode or the negative electrode, Ld is preferably equal to or more than Lc.

From the viewpoint of supporting the positive electrode or the negative electrode, the length of the insertion part is preferably shorter than the length of the portion of the collector other than the insertion part, and the length of the insertion part is more preferably shorter than the length of the portion of the collector other than the insertion part by 1 mm to 10 mm.

The electrode material may include a plurality of insertion parts (for example, two or more insertion parts at one end in the width direction), and the above-described length of the insertion part refers to a preferred numerical range of the length of each insertion part.

A thickness of the insertion part is preferably 3 $\mu$m to 100 $\mu$m, more preferably 5 $\mu$m to 70 $\mu$m, and particularly preferably 10 $\mu$m to 50 $\mu$m.

From the viewpoint of facilitating the insertion of the insertion part into the opening portion, a ratio of the thickness of the insertion part to the height of the opening portion (thickness of insertion part/height of opening portion) is preferably 0.01 to 1 and more preferably 0.1 to 0.9.

The electrode material may include a plurality of insertion parts (for example, two or more insertion parts at one end in the width direction), and the above-described thickness of the insertion part refers to a preferred numerical range of the thickness of each insertion part.

From the viewpoint of improving joining stability and energy efficiency, a width of the insertion part is preferably 5 mm to 200 mm.

In the present disclosure, the width of the insertion part and the opening portion can be measured using a caliper, a scale, or the like. Specifically, a caliper conforming to JIS B 7507 (2013) can be used.

From the viewpoint of improving electrical stability, it is preferable that, in a case where the width of the first insertion part is denoted by W1A and the width of the first opening portion is denoted by W2A, the following expression 5 is satisfied.

$$\text{(Expression 5)} \quad W2A > W1A > W2A/2$$

From the viewpoint of improving electrical stability, it is preferable that, in a case where the width of the second insertion part is denoted by W1B and the width of the second opening portion is denoted by W2B, the following expression 6 is satisfied.

$$\text{(Expression 6)} \quad W2B > W1B > W2B/2$$

The electrode material may include a plurality of insertion parts (for example, two or more insertion parts at one end in the width direction), and the above-described width of the insertion part refers to a preferred numerical range of the width of each insertion part.

The first insertion part and the second insertion part can be provided by setting the lengths of the first collector and the second collector to be larger than the lengths of the positive electrode, the separator, and the like. In addition, the first insertion part and the second insertion part can also be provided by adjusting the position of the collectors. In addition, examples thereof include a method in which, in a case where the collector is laminated on the surface of the pouch, the end part of the pouch is bent or the like to form a portion where the pouch and the collector do not come into contact with each other, as the first insertion part and the second insertion part. In a case where the insertion part is formed by folding the end part of the pouch, it is preferable to fold or cut the end part of the pouch so that the end part of the pouch does not hinder the insertion of the insertion part into the opening portion, during the insertion into the opening portion.

(Adhesive layer)

The battery according to the present disclosure may include an adhesive layer between the first pouch and the first collector and between the second pouch and the second collector. As a result, adhesiveness between the pouch and the collector can be improved.

The adhesive layer can contain the above-described thermoplastic resin.

A content of the thermoplastic resin with respect to the total mass of the adhesive layer is not particularly limited, and may be 50% by mass or more, 70% by mass or more, 90% by mass or more, or 100% by mass.

The adhesive layer may contain the above-described additives.

A thickness of the adhesive layer is not particularly limited, and can be 0.1 $\mu$m to 3 $\mu$m.

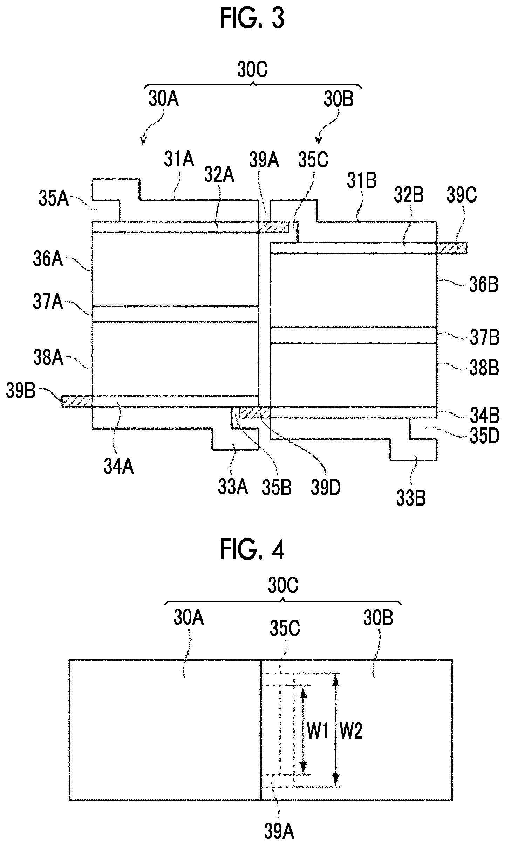

Hereinafter, embodiments of the battery according to the present disclosure will be described with reference to Figs. 3 to 6. The battery according to the present disclosure is not limited to the following.

In Fig. 3, adjacent electrode materials are indicated by 30A and 30B, and the battery is represented by 30C. The electrode materials 30A and 30B include first pouches 31A and 31B, first collectors 32A and 32B, positive electrodes 36A and 36B, separators 37A and 37B, negative electrodes 38A and 38B, second pouches 33A and 33B, and second collectors 34A and 34B.

As shown in Fig. 3, the electrode material 30A includes a first opening portion 35A between the first pouch 31A and the first collector 32A, and a second opening portion 35B between the second pouch 33A and the second collector 34A. In Fig. 3, a form in which the first opening portion 35A and the second opening portion 35B are provided at different end parts of the electrode material 30A is shown, but the present invention is not limited thereto.

As shown in Fig. 3, the electrode material 30A includes a first insertion part 39A by the first collector 32A and a second insertion part 39B by the second collector 34A. In Fig. 3, a form in which the first insertion part 39A and the second insertion part 39B are provided at different end parts of the electrode material 30A is shown, but the present invention is not limited to this. In addition, in Fig. 3, diagonal lines are added to the first insertion part 39A and the second insertion part 39B.

In addition, the electrode material 30B includes a first opening portion 35C between the first pouch 31B and the first collector 32B, and a second opening portion 35D between the second pouch 33B and the second collector 34B. In Fig. 3, a form in which the first opening portion 35C and the second opening portion 35D are provided at different end parts of the electrode material 30B is shown, but the present invention is not limited thereto.

As shown in Fig. 3, the electrode material 30B includes a first insertion part 39C by the first collector 32B and a second insertion part 39D by the second collector 34B. In Fig. 3, a form in which the first insertion part 39C and the second insertion part 39D are provided at different end parts of the electrode material 30B is shown, but the present invention is not limited thereto. In addition, in Fig. 3, diagonal lines are added to the first insertion part 39C and the second insertion part 39D.

As shown in Fig. 3, the first insertion part 39A of the electrode material 30A is inserted into the first opening portion 35C of the electrode material 30B, and the second insertion part 39D of the electrode material 30B is inserted into the second opening portion 35B of the electrode material 30A, whereby the adjacent electrode materials are bonded to each other.

In Fig. 3, an example in which the first opening portion and the like are provided at an end part of the electrode material in a length direction; but the present invention is not limited thereto, and the first opening portion and the like may be provided at an end part in a width direction, or may be provided at end parts in the length direction and the width direction.

Fig. 4 is a top view of the battery 30C shown in Fig. 3. Figs. 3 and 4 show an example of a battery in which two electrode materials are used; but the present invention is not limited thereto, and a battery in which three or more electrode materials are used may be used.

In Fig. 4, the first insertion part 39A and the first opening portion 35C are indicated by dotted lines, respectively.

In the first insertion part 39A, a width of the first insertion part 39A is indicated by reference numeral W1, and a width of the first opening portion 35C is indicated by W2.

In Fig. 4, an example in which one first insertion part 39A is provided at the end part of the electrode material 30A is shown; but the present invention is not limited thereto, and two or more first insertion parts 39A may be provided.

In addition, in Fig. 4, an example in which one first opening portion 35C is provided at the end part of the electrode material 30B is shown; but the present invention is not limited thereto, and two or more first opening portions 35C may be provided.

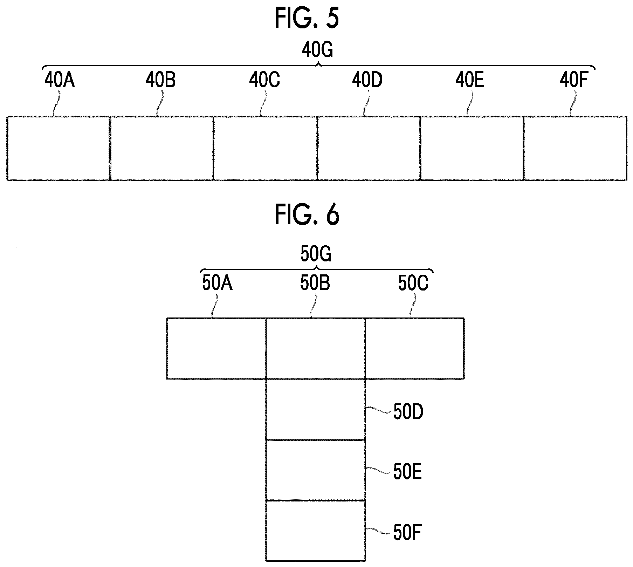

In a case of a battery in which three or more electrode materials are used, the electrode materials may be arranged in one direction as shown in Fig. 5, or may be arranged in a plurality of directions as shown in Fig. 6.

In Fig. 5, the electrode materials are indicated by reference numerals 40A, 40B, 40C, 40D, 40E, and 40F, and the battery is indicated by reference numeral 40G.

In Fig. 6, the electrode materials are indicated by reference numerals 50A, 50B, 50C, 50D, 50E, and 50F, and the battery is indicated by reference numeral 50G.

The battery according to the present disclosure can be manufactured by arranging a plurality of electrode materials and inserting an insertion part of one of the electrode materials into an opening portion of the other adjacent electrode material.

The first pouch and the second pouch of the electrode material, which are arranged at the end part, may be bonded to each other. The bonding method is not particularly limited, and the bonding can be performed using a pressurization roller or the like.

After the insertion part is inserted, the opening portion may be crushed by applying pressure. In addition, a plurality of the batteries according to the present disclosure may be laminated and crushed by the weight of the batteries. In addition, the opening portion may be crushed by packaging the battery in an aluminum exterior body and performing vacuum degassing.

[Electrode material]

The electrode material according to the present disclosure includes, in the following order, a first pouch, a first collector, a positive electrode, a separator, a negative electrode, a second collector, and a second pouch, in which the electrode material further includes one or more selected from the group consisting of a first opening portion between the first pouch and the first collector, a second opening portion between the second pouch and the second collector, a first insertion part by the first collector, and a second insertion part by the second collector.

Each member constituting the electrode material is described above, and thus the description thereof will be omitted here.

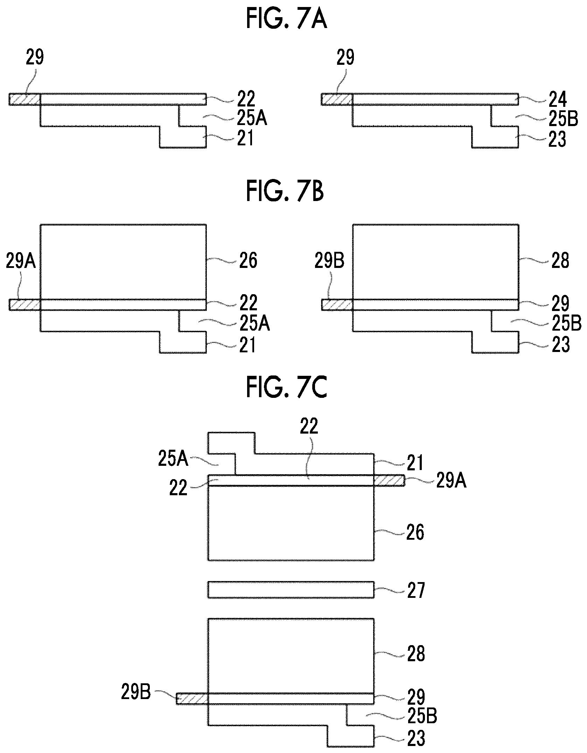

An embodiment of a manufacturing method of an electrode material will be described with reference to Figs. 7A to 7C.

Figs. 7A to 7C show an embodiment of the manufacturing method of the electrode material 20 shown in Fig. 2, but the manufacturing method of the electrode material is not limited thereto.

First, as shown in Fig. 7A, the first collector 22 is provided on the surface of the first pouch 21 in a state in which the end part is bent, and the first opening portion 25A is formed between the first pouch 21 and the first collector 22. Similarly, the second collector 24 is provided on the surface of the second pouch 23 in a state in which the end part is bent, and the second opening portion 25B is formed between the second pouch 23 and the second collector 24.

In addition, the length of the first collector 22 is set to be larger than the length of the first pouch 21, and the first insertion part 29A is provided at the end part of the first collector 22. Similarly, the length of the second collector 24 is set to be larger than the length of the second pouch 23, and the second insertion part 29B is provided at the end part of the second collector 24.

Next, as shown in Fig. 7B, the positive electrode 26 is provided on the surface of the first collector 22, and the negative electrode 28 is provided on the surface of the second collector 24.

The length of the first collector 22 is adjusted to be larger than the length of the positive electrode 26, and the length of the second collector 24 is adjusted to be larger than the length of the negative electrode 28.

Next, as shown in Fig. 7C, the electrode material 20 can be obtained by interposing the separator 27 between the positive electrode 26 and the negative electrode 28 to form a laminate.

As the first pouch, the second pouch, the first collector, and the second collector, those manufactured with a known method in the related art may be used, or those commercially available may be used.

For example, a polyethylene terephthalate film is prepared as the first pouch, an aluminum foil is prepared as the first collector, and these are laminated using an adhesive layer such as an ethylene-vinyl acetate copolymer film, whereby the first collector can be provided on the surface of the first pouch.

The method of bending the end parts of the first pouch and the second pouch is not particularly limited, and examples thereof include a method of interposing a non-adhesive film or the like between the first pouch and the first collector and between the second pouch and the second collector, and a method of holding the end parts of the first pouch and the second pouch in a bent state by clamping the end parts with a clip or the like.

A method of forming the positive electrode on the surface of the first collector and a method of forming the negative electrode on the surface of the second collector are not particularly limited, and can be carried out with a conventionally known method. For example, the positive electrode or the negative electrode can be formed by applying the electrode material containing the positive electrode active material or the negative electrode active material described above onto the surface of the first collector or the second collector.

A method of interposing the separator between the positive electrode and the negative electrode to form a laminate is not particularly limited, and can be carried out with a method known in the related art. For example, a method of using a pressurization roller can be used.

EXAMPLES

Hereinafter, the above-described embodiment will be specifically described with reference to Examples, but the above-described embodiment is not limited to Examples.

(Preparation of composition for positive electrode)

(1) A mixed solution obtained by mixing ethylene carbonate, propylene carbonate, and diethyl carbonate was mixed with a 0.9 mol/L LiPF$_6$ solution (electrolyte), and vinylene carbonate (VC) was further mixed therewith to obtain an electrolytic solution X1.

(2) 2 g of a conductive auxiliary agent (Ketjen black) and 174 g of a positive electrode active material (iron phosphate) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (176 g).

(3) The electrolytic solution X1 (64 g) was added to the kneaded material Y1 (176 g), and the mixture was stirred at 1,500 rpm for 120 seconds with a mixer (AWATORI RENTARO ARE-310, manufactured by THINKY Corporation) to obtain a composition for a positive electrode.

(Adjustment of composition for negative electrode)

(1) The same electrolytic solution X1 (64 g) used in the adjustment of the composition for a positive electrode was prepared.

(2) 6.5 g of a conductive auxiliary agent (carbon black) and 152.5 g of graphite as a negative electrode active material were stirred at 900 rpm for 18 seconds with a mixer (AWATORI RENTARO ARE-310, manufactured by THINKY Corporation) to prepare a kneaded material Z1.

(3) The electrolytic solution X1 (64 g) was added to the kneaded material Z1 (159 g), and the mixture was stirred at 900 rpm for 30 seconds with a mixer (AWATORI RENTARO ARE-310, manufactured by THINKY Corporation) to obtain a composition for a negative electrode.

<Example 1>

As a first pouch and a second pouch, a polyethylene terephthalate (PET) film having a thickness of 12 μm, a length of 235 mm, and a width of 169 mm was prepared.

An adhesive was applied onto a surface of the PET film and dried to form an adhesive layer having a thickness of 8 μm.

Both end parts of the PET film in a length direction and both end parts of the PET film in a width direction were bent; an aluminum foil (first collector; thickness: 20 μm, length: 215 mm, width: 159 mm, surface roughness Ra: 0.5 μm, carbon

coating) was laminated on the surface of the adhesive layer; and then a first opening portion A was formed at one end part in the length direction, a first opening portion B was formed at one end part in the width direction, a first insertion part A was formed at the other end part in the length direction, and a first insertion part B was formed at the other end part in the width direction.

A length of the first opening portion A was 15 mm, a height thereof was 100 μm, and a width thereof was 149 mm.

A length of the first opening portion B was 15 mm, a height thereof was 100 μm, and a width thereof was 205 mm.

A length of the first insertion part A was 10 mm, a thickness thereof was 20 μm, and a width thereof was 144 mm.

A length of the first insertion part B was 10 mm, a thickness thereof was 10 μm, and a width thereof was 200 mm.

The composition for a positive electrode was applied onto a portion of the first collector other than the first insertion part to form a positive electrode having a thickness of 600 μm.

An adhesive was applied onto a surface of the PET film and dried to form an adhesive layer having a thickness of 8 μm.

Both end parts of the PET film in a length direction and both end parts of the PET film in a width direction were bent; a copper foil (second collector; thickness: 10 μm, length: 217 mm, width: 161 mm, surface roughness Ra: 0.55 μm) was laminated on the surface of the adhesive layer; and then a second opening portion A was formed at one end part in the length direction, a second opening portion B was formed at one end part in the width direction, a second insertion part A was formed at the other end part in the length direction, and a second insertion part B was formed at the other end part in the width direction.

A length of the second opening portion A was 15 mm, a height thereof was 100 μm, and a width thereof was 151 mm.

A length of the second opening portion B was 15 mm, a height thereof was 100 μm, and a width thereof was 207 mm.

A length of the second insertion part A was 10 mm, a thickness thereof was 10 μm, and a width thereof was 146 mm.

A length of the second insertion part B was 10 mm, a thickness thereof was 10 μm, and a width thereof was 202 mm.

The composition for a negative electrode was applied onto a portion of the second collector other than the second insertion part to form a negative electrode having a thickness of 500 μm.

A polyethylene separator (thickness: 20 μm) was prepared as a separator.

The separator was interposed between the above-described positive electrode and the above-described negative electrode, and pressurized with a flat plate press to obtain an electrode material.

The electrode material includes the first opening portion A and the second insertion part A at one end part in the length direction, the second opening portion A and the first insertion part A at the other end part in the length direction, the first opening portion B and the second insertion part B at one end part in the width direction, and the second opening portion B and the first insertion part B at the other end part in the width direction.

<Example 2>

As a first pouch and a second pouch, a polyethylene terephthalate (PET) film having a thickness of 12 μm, a length of 235 mm, and a width of 169 mm was prepared.

An adhesive was applied onto a surface of the PET film and dried to form an adhesive layer having a thickness of 8 μm.

Both end parts of the PET film in the width direction were bent, an aluminum foil (first collector; thickness: 20 μm, length: 215 mm, width: 149 mm, surface roughness Ra: 0.5 μm) was laminated on the surface of the adhesive layer, and a first opening portion was formed at one end part in the width direction and a first insertion part was formed at the other end part in the width direction.

A length of the first opening portion was 15 mm, a height thereof was 100 μm, and a width thereof was 149 mm.

A length of the first insertion part was 10 mm, a thickness thereof was 144 μm, and a width thereof was 20 mm.

The composition for a positive electrode was applied onto a portion of the first collector other than the first and third insertion parts to form a positive electrode having a thickness of 600 μm.

An adhesive was applied onto a surface of the PET film and dried to form an adhesive layer having a thickness of 8 μm.

Both end parts of the PET film in the width direction were bent, a copper foil (second collector; thickness: 10 μm, length: 217 mm, width: 151 mm, surface roughness Ra: 0.55 μm) was laminated on the surface of the adhesive layer, and a second opening portion was formed at one end part in the width direction and a second insertion part was formed at the other end part in the width direction.

A length of the second opening portion was 15 mm, a height thereof was 100 μm, and a width thereof was 151 mm.

A length of the second insertion part was 10 mm, a thickness thereof was 10 μm, and a width thereof was 146 mm.

The composition for a negative electrode was applied onto a portion of the second collector other than the second insertion part to form a negative electrode having a thickness of 500 μm.

A polyethylene separator (thickness: 20 μm) was prepared as a separator.

The separator was interposed between the above-described positive electrode and the above-described negative electrode, and pressurized with a flat plate press to obtain an electrode material.

The electrode material includes the first opening portion and the second insertion part at one end part in the width direction, and includes the second opening portion and the first insertion part at the other end part in the width direction.

<Comparative Example 1>

As a first pouch and a second pouch, a polyethylene terephthalate (PET) film having a thickness of 12 μm, a length of 235 mm, and a width of 169 mm was prepared.

An adhesive containing an ethylene-vinyl acetate copolymer was applied onto a surface of the PET film, and dried to form an adhesive layer having a thickness of 8 μm.

An aluminum foil (first collector; thickness: 20 μm, length: 205 mm, width: 149 mm, surface roughness Ra: 0.5 μm, carbon coating) was laminated on the surface of the above-described adhesive layer.

The composition for a positive electrode was applied onto a surface of the first collector to form a positive electrode having a thickness of 600 μm.

An adhesive containing an ethylene-vinyl acetate copolymer was applied onto a surface of the PET film, and dried to form an adhesive layer having a thickness of 8 μm.

A copper foil (second collector; thickness: 10 μm, length: 207 mm, width: 151 mm, surface roughness Ra: 0.55 μm) was laminated on the surface of the above-described adhesive layer.

The composition for a negative electrode was applied onto a surface of the second collector to form a negative electrode having a thickness of 500 μm.

A polyethylene separator (thickness: 20 μm) was prepared as a separator.

The separator was interposed between the above-described positive electrode and the above-described negative electrode, and pressurized with a flat plate press to obtain a battery.

The battery did not include an opening portion and an insertion part.

<<Evaluation of energy density>>

Four electrode materials produced in Example 1 were prepared, and joined to each other by the opening portions and the insertion parts provided at both end parts in the length direction and the width direction, thereby producing a battery having a length of 450 mm and a width of 318 mm. A distance between the positive electrodes and a distance between the negative electrodes of adjacent electrode materials were 0 mm.

In a case of the joining, the end part of the pouch in which the insertion part was formed was bent so as not to hinder the insertion of the insertion part into the opening portion, and was cut after the joining.

The first pouch and the second pouch at the end parts of the produced battery in the length direction and the width direction were bonded with a vacuum laminator, and accommodated in an aluminum exterior body. The total volume of the battery accommodated in the exterior body was 0.21 L.

Two electrode materials produced in Example 2 were prepared, and joined to each other by the opening portions and the insertion parts provided at both end parts in the width direction, thereby producing a battery having a length of 450 mm and a width of 169 mm.

In a case of the joining, the end part of the pouch in which the insertion part was formed was bent so as not to hinder the insertion of the insertion part into the opening portion, and was cut after the joining.

The first pouch and the second pouch at the end parts of the produced battery in the length direction and the width direction were bonded with a vacuum laminator. A distance between the positive electrodes and a distance between the negative electrodes of adjacent electrode materials were 0 mm.

The above-described batteries were arranged side by side in the length direction to have a size of a length of 450 mm × a width of 318 mm.

After arranging the two batteries side by side, the batteries were accommodated in an aluminum exterior body. The total volume of the battery accommodated in the exterior body was 0.20 L.

The joining of the electrode materials described above was carried out by inserting the first insertion part of one electrode material into the first opening portion of the other electrode material and inserting the second insertion part of one electrode material into the second opening portion of the other electrode material.

The first pouch and the second pouch at the end parts of the battery produced in Comparative Example 1 in the length direction and the width direction were bonded with a vacuum laminator, four of these batteries were prepared, and two of the batteries were arranged in the length direction and the width direction to have a size of a length 450 × a width 318 mm. After arranging the four batteries side by side, the batteries were accommodated in an aluminum exterior body. A distance between the positive electrodes and a distance between the negative electrodes of adjacent batteries were 10 mm. The total volume of the battery accommodated in the exterior body was 0.23 L.

Potentials of the batteries of Example 1, Example 2, and Comparative Example 1 were all 3.2 V, and the total capacity thereof was 43 Wh.

Energy densities (Wh/L) of the batteries of Example 1, Example 2, and Comparative Example 1 were obtained by dividing the total capacity of the battery by the total volume.

A ratio of the energy densities (Wh/L) of the batteries of Examples 1 and 2 to the energy density (Wh/L) of the battery of Comparative Example 1 (hereinafter, referred to as an energy density ratio) was evaluated based on the following evaluation standard. The evaluation results are summarized in Table 1.

(Evaluation standard)

A: energy density ratio was 1.1 or more.
B: energy density ratio was 1.05 or more and less than 1.1.
C: energy density ratio was less than 1.05.

[Table 1]

|  | Evaluation of energy density |
| --- | --- |
| Example 1 | A |
| Example 2 | B |
| Comparative Example 1 | - |

From Examples, it was found that the size of the battery according to the present disclosure could be appropriately adjusted by joining the electrode materials without using a special device or the like.

In addition, from Table 1, it was found that the battery according to the present disclosure had an excellent energy density.

Explanation of References

10, 20, 30A, 30B, 40A, 40B, 40C, 40D, 40E, 40F, 50A, 50B, 50C, 50D, 50E, 50F: electrode material
30C, 40G, 50G: battery
11, 21, 31A, 31B: first pouch
12, 22, 32A, 32B: first collector
13, 23, 33A, 33B: second pouch
14, 24, 34A, 34B: second collector
15A, 25A, 35A, 35B: first opening portion
15B, 25B, 35C, 35D: second opening portion
16, 26, 36A, 36B: positive electrode
17, 27, 37A, 37B: separator
18, 28, 38A, 38B: negative electrode
29A, 39A, 39B: first insertion part
29B, 39C, 39D: second insertion part
L1: length of first opening portion
L2: length of second insertion part
H1: height of first opening portion
W1: width of first insertion part
W2: width of first opening portion

The disclosure of JP2022-120968 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

**Claims**

1. A battery comprising:

   a plurality of electrode materials,
   wherein the electrode material comprises a first pouch, a first collector, a positive electrode, a separator, a negative electrode, a second collector, and a second pouch in this order,
   at least one of adjacent electrode materials has at least one of a first opening portion between the first pouch and the first collector or a second opening portion between the second pouch and the second collector,
   at least the other of the adjacent electrode materials has at least one of a first insertion part by the first collector or a second insertion part by the second collector, and
   the adjacent electrode materials are joined by at least one of insertion of the first insertion part into the first opening portion or insertion of the second insertion part into the second opening portion.

2. The battery according to claim 1,
   wherein positive electrodes and negative electrodes of the adjacent electrode materials are in contact with each other.

3. The battery according to claim 1 or 2,
   wherein a ratio of a thickness of the first collector to a thickness of the positive electrode and a ratio of a thickness of the second collector to a thickness of the negative electrode are less than 1.

4. The battery according to claim 1 or 2,
   wherein, in a case where thicknesses of positive electrodes of the adjacent electrode materials are each denoted by A1 and A2 and thicknesses of negative electrodes of the adjacent electrode materials are each denoted by B1 and B2, the following expression 1 and expression 2 are satisfied,

$$\text{(expression 1)} \quad 0.8 \le A1/A2 \le 1.2$$

$$\text{(expression 2)} \quad 0.8 \le B1/B2 \le 1.2.$$

5. The battery according to claim 1 or 2,
   wherein, in a case where thicknesses of first collectors of the adjacent electrode materials are each denoted by C1 and C2 and thicknesses of second collectors of the adjacent electrode materials are each denoted by D1 and D2, the following expression 3 and expression 4 are satisfied,

$$\text{(expression 3)} \quad 0.8 \le C1/C2 \le 1.2$$

$$\text{(expression 4)} \quad 0.8 \le D1/D2 \le 1.2.$$

6. The battery according to claim 1 or 2,
   wherein a length of the first insertion part is smaller than a length of a portion of the first collector other than the first insertion part by 1 mm to 10 mm, and a length of the second insertion part is smaller than a length of a portion of the second collector other than the second insertion part by 1 mm to 10 mm.

7. The battery according to claim 1 or 2,
   wherein, in a case where a width of the first insertion part is denoted by W1A and a width of the first opening portion is denoted by W2A, the following expression 5 is satisfied, and in a case where a width of the second insertion part is denoted by W1B and a width of the second opening portion is denoted by W2B, the following expression 6 is satisfied,

(expression 5)    $W2A > W1A > W2A/2$

(expression 6)    $W2B > W1B > W2B/2.$

8.  The battery according to claim 1 or 2,
    wherein the first pouch and the second pouch of the electrode material, which is arranged at an end part, are bonded to each other.

9.  An electrode material comprising, in the following order:

    a first pouch;
    a first collector;
    a positive electrode;
    a separator;
    a negative electrode;
    a second collector; and
    a second pouch,
    wherein the electrode material further comprises one or more selected from the group consisting of a first opening portion between the first pouch and the first collector, a second opening portion between the second pouch and the second collector, a first insertion part by the first collector, and a second insertion part by the second collector.

## FIG. 1

## FIG. 2

## FIG. 3

## FIG. 4

## FIG. 5

40G

40A    40B    40C    40D    40E    40F

## FIG. 6

50G

50A    50B    50C

50D

50E

50F

## FIG. 7A

29

22
25A
21

29

24
25B
23

## FIG. 7B

29A

26

22
25A
21

29B

28

29
25B
23

## FIG. 7C

25A

22

22

21

29A

26

27

28

29B

29
25B
23

## INTERNATIONAL SEARCH REPORT

| International application No. |
|---|
| **PCT/JP2023/027223** |

| A. | CLASSIFICATION OF SUBJECT MATTER |
|---|---|

*H01M 10/04*(2006.01)i; *H01M 4/02*(2006.01)i; *H01M 4/13*(2010.01)i; *H01M 10/052*(2010.01)i; *H01M 10/0585*(2010.01)i; *H01M 50/105*(2021.01)i; *H01M 50/50*(2021.01)i; *H01M 50/548*(2021.01)i; *H01M 50/557*(2021.01)i
FI:  H01M10/04 Z; H01M4/02 Z; H01M4/13; H01M10/052; H01M10/0585; H01M50/105; H01M50/50 201Z; H01M50/548 101; H01M50/557

According to International Patent Classification (IPC) or to both national classification and IPC

| B. | FIELDS SEARCHED |
|---|---|

Minimum documentation searched (classification system followed by classification symbols)

H01M10/04; H01M4/02; H01M4/13; H01M10/052; H01M10/0585; H01M50/105; H01M50/50; H01M50/548; H01M50/557

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2012/077707 A1 (MIE INDUSTRY AND ENTERPRISE SUPPORT CENTER) 14 June 2012 (2012-06-14) | 1-9 |
| A | JP 2001-185096 A (SONY CORP) 06 July 2001 (2001-07-06) | 1-9 |
| A | JP 59-40470 A (FUJI ELECTROCHEMICAL CO LTD) 06 March 1984 (1984-03-06) | 1-9 |
| A | JP 11-345604 A (HITACHI LTD) 14 December 1999 (1999-12-14) | 1-9 |
| A | JP 2008-16368 A (NEC CORP) 24 January 2008 (2008-01-24) | 1-9 |
| A | JP 2006-19214 A (MITSUBISHI ELECTRIC CORP) 19 January 2006 (2006-01-19) | 1-9 |
| A | JP 2019-216102 A (ELIIY POWER CO LTD) 19 December 2019 (2019-12-19) | 1-9 |
| A | JP 2004-111098 A (NISSAN MOTOR CO LTD) 08 April 2004 (2004-04-08) | 1-9 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**INTERNATIONAL SEARCH REPORT**
Information on patent family members

International application No.

**PCT/JP2023/027223**

| Patent document cited in search report | | | Publication date (day/month/year) | Patent family member(s) | | | Publication date (day/month/year) |
|---|---|---|---|---|---|---|---|
| WO | 2012/077707 | A1 | 14 June 2012 | US | 2013/0000110 | A1 | |
| | | | | CN | 102687333 | A | |
| | | | | KR | 10-2012-0093839 | A | |
| JP | 2001-185096 | A | 06 July 2001 | (Family: none) | | | |
| JP | 59-40470 | A | 06 March 1984 | (Family: none) | | | |
| JP | 11-345604 | A | 14 December 1999 | (Family: none) | | | |
| JP | 2008-16368 | A | 24 January 2008 | (Family: none) | | | |
| JP | 2006-19214 | A | 19 January 2006 | (Family: none) | | | |
| JP | 2019-216102 | A | 19 December 2019 | (Family: none) | | | |
| JP | 2004-111098 | A | 08 April 2004 | US | 2003/0215702 | A1 | |
| | | | | EP | 1394874 | A1 | |

Form PCT/ISA/210 (patent family annex) (January 2015)

**EP 4 564 495 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020564419 A

- JP 2022120968 A